# EUROPÄISCHE PATENTANMELDUNG

(11) **EP 3 072 936 A1**
(43) Veröffentlichungstag der Anmeldung: **28.09.2016**
(21) Anmeldenummer: 15160680.3
(22) Anmeldetag: 24.03.2015
(51) Int. Cl.: C09D 163/00, C21D 8/00, H01F 41/02

(54) **Coil und Elektroband oder -blech**

(71) Anmelder: Voestalpine Stahl GmbH, 4020 Linz (AT)
(72) Erfinder: Fluch, Ronald, 4020 Linz (AT); Tiefenthaller, Roman, 4840 Vöcklabruck (AT)
(74) Vertreter: Jell, Friedrich

(57) **Zusammenfassung**

Es wird ein Coil und ein Elektroband oder -blech mit mit wenigstens einer auf einer dessen Flachseiten vorgesehenen, heißhärtenden Backlackschicht, die eine Epoxydharzbasis, mindestens einen Härter und wenigstens einen Füllstoff aufweist, gezeigt. Um eine hohe Lagerstabilität und Dauertemperaturfestigkeit zu erreichen, wird vorgeschlagen, dass der Füllstoff der Backlackschicht ein Metallcarbonat, -sulfat, -sulfid, -silicat oder -phosphat oder eine beliebige Mischung mehrerer dieser aufweist.

## Beschreibung

Die Erfindung betrifft ein Elektroband oder -blech mit wenigstens einer auf einer dessen Flachseiten vorgesehenen, heißhärtenden Backlackschicht, die eine Epoxydharzbasis, mindestens einen Härter und wenigstens einen Füllstoff aufweist.

Als Beschichtung von Elektrobändern bzw. -blechen sind aus dem Stand der Technik (WO2014/089593A1) heißhärtende Schmelzklebelacke bzw. Backlacke bekannt. Nachteilig zeigte sich jedoch bei Blechpaketen aus Elektrobändern bzw. -blechen mit heißhärtenden Backlackschichten auf Epoxydharzbasis eine reduzierte Standfestigkeit. So konnte am Backlack im endvernetzten Zustand ein deutlich über die Verwendungsdauer abfallende Haftfestigkeit und elektrischer Isolationswiderstand festgestellt werden. Die Möglichkeit, diesen Nachteilen mit einer erhöhten Vernetzungsdichte der heißhärtenden Backlackschicht entgegen zu steuern, wird jedoch durch die Lagerstabilität der backlackbeschichten Elektrobänder bzw. -bleche beschränkt.

Die Erfindung hat sich daher die Aufgabe gestellt, ausgehend vom Eingangs geschilderten Stand der Technik die Backlackschicht mit einer Epoxydharzbasis derart zu verändern, dass einerseits das Elektroband oder -blech eine hohe Lagerstabilität und andererseits die endvernetzte Backlackschicht eine hohe Standfestigkeit aufweisen können.

Die Erfindung wird dadurch gelöst, dass der Füllstoff der Backlackschicht ein Metallcarbonat, -sulfat, -sulfid, -silicat oder -phosphat oder eine beliebige Mischung mehrerer dieser aufweist.

Weist der Füllstoff der Backlackschicht ein Metallcarbonat, -sulfat, -sulfid, -silicat oder -phosphat oder eine beliebige Mischung mehrerer dieser auf, konnte überraschend festgestellt werden, dass damit die stoffschlüssige Backlackverbindung im endvernetzten Zustand in ihrer Standfestigkeit deutlich erhöht werden kann. Insbesondere konnte eine erhöhte Dauertemperaturfestigkeit festgestellt werden, was selbst nach einer vergleichsweise langen Betriebsdauer eine erhöhte Schälfestigkeit an der stoffschlüssigen Backlackverbindung beispielsweise eines Blechpakets garantieren kann. Diesen Vorteilen ist gemeinsam, dass an der Vernetzungsdichte der Backlackschicht es nicht zwingend einer Änderung bedarf, sodass erfindungsgemäß auch eine vergleichsweise hohe Lagerstabilität am backlackbeschichteten Elektroband oder -blech ermöglicht werden kann. Als besonders bevorzugt haben sich gegenüber den anderen Füllstoffen Metallcarbonat und Metallsulfat als Füllstoff herausgestellt. Metallcarbonat und Metallsulfat können gegenüber den anderen Füllstoffen nämlich zu Verbesserungen nicht nur in der Lagerstabilität des flüssigen Backlacks, sondern auch in der Festigkeit des ausgehärteten Backlacks führen. Dies gilt insbesondere für Calciumcarbonat als Metallcarbonat und Bariumsulfat als Metallsulfat. Außerdem können die erfindungsgemäßen Füllstoffe die Formstabilität eines gelagerten Coils aus dem erfindungsgemäßen Elektroblech verbessern. Die Füllstoffe können beispielsweise zur Erhöhung der Oberflächenrauigkeit der Backlackschicht beitragen und damit ein selbstständiges Abrollen des Elektrobands erschweren. Im Allgemeinen wird erwähnt, dass dies insbesondere von Vorteil sein kann, wenn beide Flachseiten des Elektrobands eine Backlackschicht aufweisen.

Weist die heißhärtende Backlackschicht 5 bis 20 Vol.-% Füllstoff auf, kann dies eine eventuelle Erhöhung der Schichtdicke bei einem drucklosen Heißhärten der Backlackschicht verhindern, was auf einen Auffederungseffekt während der Aufheizphase der Backlackschicht zurückgeführt werden kann. Die erfindungsgemäßen Füllstoffe reduzieren jedoch die Fließfähigkeit der Backlackschicht so weit, dass es bis zum Einsetzen der chemischen Reaktion zu keiner Auffederung und damit keiner erhöhten Schichtdicke an der Backlackschicht im vernetzten Zustand kommen kann. Hiebei kann sich bereits bevorzugt 7 bis 16 Vol.-% Füllstoff auszeichnen.

Eine vorteilhafte Zusammensetzung kann sich ergeben, wenn die heißhärtende Backlackschicht 6 bis 10 Vol.-% Härter und 74 bis 85 Vol.-%, beispielsweise als

Rest, die Epoxydharz als Basis aufweist. Neben der Epoxydharzbasis als Rest können in der Backlackschicht auch eventuelle Verunreinigungen enthalten sein.

Für den Füllstoff kann sich als Metallcarbonat beispielsweise Calciumcarbonat (Ca-C03) auszeichnen. So kann Calciumcarbonat eine vergleichsweise hohe Oxidationsbeständigkeit aufweisen, was die Stabilität des Backlacks deutlich erhöhen kann. Zudem kann sich die Struktur von Calciumcarbonat im gehärteten Backlack bei der Steigerung der Festigkeit auszeichnen.

Zur weiteren Festigkeitssteigerung am gehärteten Backlack kann beitragen, wenn als Metallsulfat Bariumsulfat (BaS04) als Füllstoff verwendet wird.

Für den Füllstoff kann sich als Metallsulfid beispielsweise Zinksulfid (ZnS) auszeichnen. Als Metallsilicat kann sich für den Füllstoff beispielsweise Magnesiumsilicat (MgO3Si) oder Aluminiumsilicat auszeichnen. Zudem kann sich als Füllstoff Metallphosphat beispielsweise Zinkphosphat Zn3(PO4)2 auszeichnen. Weiter kann sich für den Füllstoff als Mischung beispielsweise Lithopone auszeichnen.

Die Haftfestigkeit der vernetzten Backlackschicht kann weiter erhöht werden, wenn der Füllstoff eine mittlere Korngröße von 0,6 bis 3 µm aufweist.

Weist der Härter eine Dicyandiamidbasis auf, kann dies weiter zur Erhöhung der Lagerstabilität der Backlackschicht beitragen.

Um die Verarbeitung des Elektrobands bzw. -blechs zu erleichtern, kann die Backlackschicht mindestens zwei Härter mit unterschiedlicher Reaktivität mit der Epoxidharzbasis, beispielsweise bei Raumtemperatur und/oder beim Trocknungsvorgang der Backlackschicht - beispielsweise bei 180 bis 240 Grad Celsius, aufweisen. Beispielsweise kann damit über eine Vorreaktion eines der beiden Härter die Lagerstabilität und/oder auch die Viskosität der Backlackschicht eingestellt werden. Hervoragende mechanische Eigenschaften sowie eine gute Klebrigkeit kann sichergestellt werden, indem die Epoxidharzbasis Bisphenol-A (2,2-Bis-(4-hydroxyphenyl)-propan) ist. Im Allgemeinen wird erwähnt, dass die Epoxidharzbasis auf Glycidylethern von mehrwertigen Phenolen basieren kann, wie dies Bisphenol-A beispielsweise darstellt.

Vorzugsweise weist das Elektroband oder -blech auf dessen beiden Flachseiten die heißhärtende Backlackschicht auf, um dieses gegenüber Umwelteinflüssen zu schützen bzw. damit dessen Weiterverarbeitung zu erleichtern.

Vorzugsweise kann das Elektroband oder -blech zu einem Coil aufgewickelt werden und in diesem aufgewickelten Zustand aufgrund der erfindungsgemäßen Füllstoffe eine hohe Formstabilität des Coils gewährleisten. Auch beispielsweise dann, wenn das Elektroband oder -blech auf dessen beiden Flachseiten die heißhärtende Backlackschicht aufweist.

Besonders auszeichnen kann sich die Erfindung, wenn Metallcarbonat, -sulfat, -sulfid, -silicat oder -phosphat oder eine beliebige Mischung mehrerer dieser als Füllstoff bei einem heißhärtenden Backlack mit einer Epoxydharzbasis und mit einem Härter zur Erhöhung der Formstabilität eines Coils aus einem aufgewickelten Elektroband oder -blech, das auf mindestens einer dessen Flachseiten mit dem Backlack beschichtet ist, verwendet wird.

Außerdem kann Metallcarbonat, -sulfat, -sulfid, -silicat oder -phosphat oder eine beliebige Mischung mehrerer dieser als Füllstoff bei einem heißhärtenden Backlack mit einer Epoxydharzbasis und mit einem Härter zur Erhöhung der Dauertemperaturbeständigkeit eines aus Elektroband oder -blech hergestellten Blechpakets verwendet werden, wobei das Elektroband oder -blech auf mindestens einer dessen Flachseiten mit dem Backlack beschichtet ist.

Diese erfindungsgemäßen technischen Effekte können bereits bei 5 bis 20 Vol.-%, insbesondere 7 bis 16 Vol.-%, Metallcarbonat, -sulfat, -sulfid, -silicat oder -phosphat oder eine beliebige Mischung mehrerer dieser möglich sein.

Im Folgenden wird die Erfindung beispielsweise anhand eines Ausführungsbeispiels näher erläutert.

Zum Nachweis der erzielten Effekte wurden Elektrobänder mit unterschiedlichen Zusammensetzungen an Backlack beschichtet und diese backlackbeschichteten Elektrobänder auf Lagerbeständigkeit und Schälfestigkeit nach 200 Betriebsstunden bei 200 Grad Celsius hin untersucht. Die verschiedenen Backlackschichten sind in der Tabelle 1 angeführt.

**Tabelle 1: Übersicht zu den untersuchten Backlackschichten**

| Backlackschicht | Epoxidharzbasis | Füllstoff | Härter |
|---|---|---|---|
| 1 | Bisphenol-A | Kein Füllstoff | Dicyandiamid |
| 2 | Bisphenol-A | CaCO3 | Dicyandiamid |
| 3 | Bisphenol-A | BaSO4 | Dicyandiamid |

Alle getesteten Backlackschichten 1, 2 und 3 weisen eine Epoxydharzbasis und 6 bis 10 Vol.-% Härter auf, wobei die Backlackschichten 2 und 3 zum Unterschied zur ersten Backlackschicht je 5 bis 20 Vol.-% einen Füllstoff mit einer Korngröße von 0,6 bis 3 µm aufweisen. Vorzugsweise weisen die Backlackschichten 1, 2 und 3 je 74 bis 85 Vol.-% Epoxydharzbasis bzw. im Allgemeinen je als Rest eine Epoxydharzbasis auf.

Zudem ist vorstellbar, dass mehrere Härter bei den Backlackschichten verwendet werden. Vorzugsweise wird ein weiterer Härter zugegeben, der im Vergleich zum Härter Dicyandiamid bei Raumtemperatur und/oder beim Trocknungsvorgang der Backlackschicht beispielsweise bei 180 bis 240°C, reaktionsschneller ist - so kann durch Vor-Reagieren mit der Epoxydharzbasis beispielsweise die Viskosität der Backlackschicht einstellt werden. Dies kann vorteilhaft auch ein Ausquetschen der Backlachschicht beim Klebepaketieren der vom Blechband abgetrennten Blechteile verhindern. Hierfür sind beispielsweise kaltanhärtende Amine (z.B.: AEP n-Aminoethylpiperazin, cycloaliphatisches Polyamin) als zusätzliche Härter vorstellbar. Im Allgemeinen wird zudem erwähnt, dass es sich bei den erfindungsgemäßen Füllstoffen um inaktive oder aktive bzw. diesbezüglich funktionalisierte Füllstoffe handeln kann.

Im Allgemeinen wird erwähnt, dass die angegebenen Vol.-% auf die Gesamtmenge des Festkörpers der Backlackschicht bezogen sind - bzw. die erwähnten Vol.-% zusammen 100 Vol.-% auf die Gesamtmenge des Festkörpers ergeben.

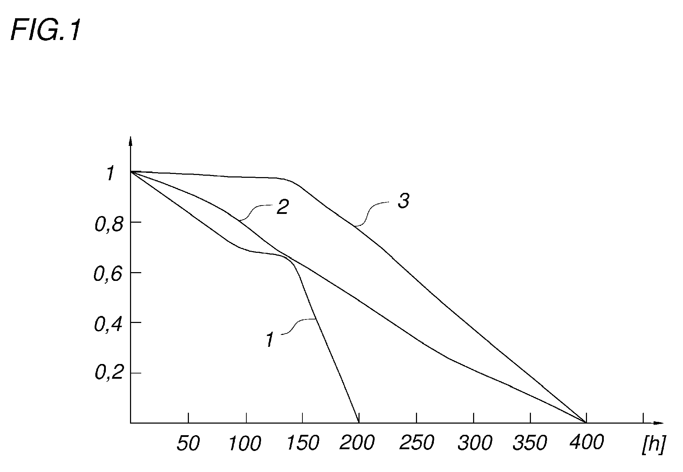

Wie in Fig. 1 zu erkennen, zeigen Elektrobänder mit den Backlackschichten 1, 2 bzw. 3, die als Coil gelagert und anschließend zu einem Blechpaket weiterverarbeitet worden sind. Im Vergleich zum Elektroband mit der Backlackschicht 1 konnte bei den Elektrobändern mit den Backlackschichten 2 und 3 eine deutlich höhere Schälfestigkeit bei einer thermischen Alterung nach 200 Betriebsstunden unter 200 Grad Celsius festgestellt werden, was am normalisierten Verlauf der Schälfestigkeit in Fig. 1 erkannt werden kann. Zudem zeigten Coils aus den Elektrobändern mit den Backlackschichten 2 und 3 vom aufgehaspelten Zustand bis zur Weiterverarbeitung zu Blechpaketen eine hohe Formstabilität des Coils.

## Patentansprüche

1. Elektroband oder -blech mit wenigstens einer auf einer dessen Flachseiten vorgesehenen, heißhärtenden Backlackschicht, die eine Epoxydharzbasis, mindestens einen Härter und wenigstens einen Füllstoff aufweist, **dadurch gekennzeichnet, dass** der Füllstoff der Backlackschicht ein Metallcarbonat, -sulfat, -sulfid, -silicat oder -phosphat oder eine beliebige Mischung mehrerer dieser aufweist.

2. Elektroband oder -blech nach Anspruch 1, **dadurch gekennzeichnet, dass** die heißhärtende Backlackschicht 5 bis 20 Vol.-%, insbesondere 7 bis 16 Vol.-%, Füllstoff aufweist.

3. Elektroband oder -blech nach Anspruch 2, **dadurch gekennzeichnet, dass** die heißhärtende Backlackschicht
6 bis 10 Vol.-% Härter und
74 bis 85 Vol.-% Epoxydharz als Basis
aufweist.

4. Elektroband oder -blech nach Anspruch 1, 2 oder 3, **dadurch gekennzeichnet, dass** das Metallcarbonat Calciumcarbonat (CaCO3) ist.

5. Elektroband oder -blech nach Anspruch 1, 2 oder 3, **dadurch gekennzeichnet, dass** das Metallsulfat Bariumsulfat (BaSO4) ist.

6. Elektroband oder -blech nach Anspruch 1, 2 oder 3, **dadurch gekennzeichnet, dass**
das Metallsulfid Zinksulfid (ZnS),
das Metallsilicat Magnesiumsilicat (MgO3Si) oder Aluminiumsilicat,
das Metallphosphat Zinkphosphat Zn3(PO4)2 oder
die Mischung Lithopone ist.

7. Elektroband oder -blech nach einem der Ansprüche 1 bis 6, **dadurch gekennzeichnet, dass** der Füllstoff eine mittlere Korngröße von 0,6 bis 3 µm aufweist.

8. Elektroband oder -blech nach einem der Ansprüche 1 bis 7, **dadurch gekennzeichnet, dass** der Härter eine Dicyandiamidbasis aufweist.

9. Elektroband oder -blech nach einem der Ansprüche 1 bis 8, **dadurch gekennzeichnet, dass** die Backlackschicht mindestens zwei Härter mit unterschiedlichen Reaktivitäten mit der Epoxidharzbasis aufweist.

10. Elektroband oder -blech nach einem der Ansprüche 1 bis 9, **dadurch gekennzeichnet, dass** die Epoxidharzbasis Bisphenol-A ist.

11. Elektroband oder -blech nach einem der Ansprüche 1 bis 10, **dadurch gekennzeichnet, dass** das Elektroband oder -blech auf dessen beiden Flachseiten die heißhärtende Backlackschicht aufweist.

12. Coil mit einem aufgewickelten Elektroband oder -blech nach einem der Ansprüche 1 bis 11.

13. Verwendung von Metallcarbonat, -sulfat, -sulfid, -silicat oder -phosphat oder eine beliebige Mischung mehrerer dieser als Füllstoff bei einem heißhärtenden Backlack mit einer Epoxydharzbasis und mit einem Härter zur Erhöhung der Formstabilität eines Coils aus einem aufgewickelten Elektroband oder -blech, das auf mindestens einer dessen Flachseiten mit dem Backlack beschichtet ist.

14. Verwendung von Metallcarbonat, -sulfat, -sulfid, -silicat oder -phosphat oder eine beliebige Mischung mehrerer dieser als Füllstoff bei einem heißhärtenden Backlack mit einer Epoxydharzbasis und mit einem Härter zur Erhöhung der Dauertemperaturbeständigkeit eines aus Elektroband oder -blech hergestellten Blechpakets, wobei das Elektroband oder -blech auf mindestens einer dessen Flachseiten mit dem Backlack beschichtet ist.

15. Verwendung nach Anspruch 13 oder 14, **dadurch gekennzeichnet, dass** 5 bis 20 Vol.-%, insbesondere 7 bis 16 Vol.-%, Metallcarbonat, -sulfat, -sulfid, -silicat oder -phosphat oder eine beliebige Mischung mehrerer dieser verwendet wird.
